# EUROPEAN PATENT APPLICATION

(11) **EP 4 598 195 A1**
(43) Date of publication of application: **06.08.2025**
(21) Application number: 23869977.1
(22) Date of filing: 02.08.2023
(51) Int. Cl.: H04W 72/0453, H04W 76/00

(54) **FREQUENCY RESOURCE ACQUISITION METHOD AND APPARATUS, FREQUENCY RESOURCE DETERMINATION METHOD AND APPARATUS, AND TERMINAL DEVICE AND NETWORK DEVICE**

(30) Priority: 27.09.2022 CN 202211185611
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2023/110706
(87) International publication number: WO 2024/066731

(57) **Abstract**

A frequency resource acquisition, determination method, apparatus, a terminal device and a network device are provided. The method is performed by a first terminal device and includes: obtaining, based on first information, a sidelink frequency resource set available for each transmission path in the case of the PDCP duplication; the first information includes at least one of the following: a combination of a layer 2 source address and a layer 2 destination address of a unicast connection between a first terminal device and a second terminal device; first indication information; or second indication information.

## Description

The present disclosure claims the priority of the Chinese patent application filed with the China Patent Office on September 27, 2022, with application No. 202211185611.9 and titled "Frequency Resource Acquisition, Determination Method, Apparatus, Terminal Device and Network Device", a disclosure of which is incorporated herein by reference in its entirety.

### TECHNICAL FIELD

The present disclosure relates to the field of communication technology, and in particular, to a frequency resource acquisition, determination method, apparatus, a terminal device and a network device.

### BACKGROUND

For a Long Term Evolution (LTE) Sidelink (SL) interface (which may be referred to as the SL interface), air interface transmission mainly adopts a broadcast mode. A network may configure a ProSe Per-Packet Reliability (PPPR) threshold and a set of carriers available for a transmission path corresponding to an L2 destination address of a sidelink interface through a System Information Block (SIB) or pre-configured information. Since there is no SL unicast connection between sending and receiving terminals, the SL receiving terminal will not provide any assistance information to the SL sending terminal. Therefore, a configuration of the set of carriers available for the transmission path corresponding to the L2 destination address of the sidelink interface remains fixed.

### SUMMARY

The embodiments of the present disclosure provide a frequency resource acquisition, determination method, apparatus, a terminal device and a network device, so as to solve the problem on how to configure a SL frequency resource set corresponding to each transmission path of SL PDCP duplication, thereby improving the gain of the SL PDCP duplication.

In order to solve the above technical problem, an embodiment of the present disclosure provides a frequency resource acquisition method, performed by a first terminal device, including:
obtaining, based on first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

Optionally, the obtaining, based on the first information, the sidelink frequency resource set available for each transmission path in the case of the Packet Data Convergence Protocol (PDCP) duplication includes:
sending the first information to a network device serving the first terminal device, and receiving, from the network device, the sidelink frequency resource set available for each transmission path in the case of the PDCP duplication, wherein the sidelink frequency resource set is determined by the network device based on the first information; or
determining, based on the first information, the sidelink frequency resource set available for each transmission path in the case of the PDCP duplication.

Optionally, the sidelink frequency resource set available for each transmission path in the case of the PDCP duplication includes: the sidelink frequency resource set corresponding to each transmission path of a Sidelink Radio Bearer (SLRB) in the case of the PDCP duplication.

Optionally, a quantity of sidelink frequency resource sets is the same as a quantity of transmission paths in the case of the PDCP duplication.

Optionally, the sidelink frequency resources in the sidelink frequency resource set include:
a sidelink carrier; and/or
a sidelink BandWidth Part (BWP).

Optionally, the sending the first information to a network device serving the first terminal device includes:
sending the first information to the network device through at least one of SidelinkUEInformation, UEAssistanceInformation or a Uu interface Radio Resource Control (RRC) signaling.

Optionally, the method further includes:
obtaining, based on second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

Optionally, the obtaining, based on the first information, an LCID corresponding to each transmission path of the Sidelink Radio Bearer (SLRB) in the case of the PDCP duplication includes:
sending the second information to the network device serving the first terminal device, and receiving, from the network device, the LCID corresponding to each transmission path of the SLRB in the case of the PDCP duplication, wherein the LCID is determined by the network device serving the first terminal based on the second information; or
determining, based on the second information, the LCID corresponding to each transmission path of the SLRB in the case of the PDCP duplication.

Optionally, the determining, based on the second information, the LCID corresponding to each transmission path of the SLRB in the case of the PDCP duplication includes:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, the sending the second information to a network device serving the first terminal device includes:
sending the second information to the network device through at least one of SidelinkUEInformation, UEAssistanceInformation or a Uu interface Radio Resource Control (RRC) signaling.

Optionally, the method further includes:
sending, to the second terminal device, the sidelink frequency resource set available for each transmission path in the case of the PDCP duplication through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

Optionally, after determining, based on the first information, the sidelink frequency resource set available for each transmission path in the case of the PDCP duplication, the method further includes:
when the first terminal device adopts a network-configured resource allocation mode, sending, to the network device, the sidelink frequency resource set available for each transmission path in the case of the PDCP duplication.

Optionally, the sidelink frequency resource set includes one or more sidelink frequency resources.

Optionally, in the case that the sidelink frequency resource set includes at least two frequency resources, the method further includes:

for a logical channel corresponding to each transmission path of an SLRB in the case of the PDCP duplication, selecting a destination sidelink frequency resource from the sidelink frequency resource set corresponding to the transmission path, to perform data transmission.

Optionally, the first indication information includes at least one of the following:
a Channel Busy Ratio (CBR) or a Channel Occupy (CO) of the first terminal device on each sidelink frequency resource;
a sidelink interface parameter of the first terminal device on each sidelink frequency resource, wherein the sidelink interface parameter includes: Sidelink-Channel State Information (SL-CSI), Sidelink-Reference Signal Receiving Power (SL-RSRP) or Sidelink Discover-Reference Signal Receiving Power (SD-RSRP);
a sidelink frequency resource set that is expected by the first terminal device and corresponds to a transmission path in the case of the sidelink PDCP duplication; or
a sidelink frequency resource set that is expected by the first terminal device and can be used in the case of the sidelink PDCP duplication.

Optionally, the second indication information includes at least one of the following:
a CBR or a CO of the second terminal device on each sidelink frequency resource;
a sidelink parameter of the second terminal device on each sidelink frequency resource;
a sidelink parameter frequency resource set that is expected by the second terminal device and corresponds to the transmission path in the case of the sidelink PDCP duplication; or
a sidelink parameter frequency resource set that is expected by the second terminal device and can be used in the case of the sidelink PDCP duplication.

The embodiment of the present disclosure further provides a frequency resource determination method, performed by a network device, including:
determining, for the first terminal device, based on the first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

Optionally, the method further includes:
receiving first information sent by the first terminal device.

Optionally, the receiving the first information sent by the first terminal device includes:
receiving the first information sent by the first terminal device through at least one of SidelinkUEInformation, UEAssistanceInformation or a Uu interface Radio Resource Control (RRC) signaling.

Optionally, the method further includes:
determining, based on the second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

Optionally, determining, based on the second information, the Logical Channel Identity (LCID) corresponding to each transmission path of the Sidelink Radio Bearer (SLRB) in the case of the PDCP duplication includes:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, the method further includes:
receiving the second information sent by the first terminal device.

Optionally, the receiving the second information sent by the first terminal device includes:
receiving the second information sent by the first terminal device through at least one of SidelinkUEInformation, UEAssistanceInformation or a Uu interface Radio Resource Control (RRC) signaling.

Optionally, the method further includes:
sending, to the first terminal device, the Logical Channel Identity (LCID) corresponding to each transmission path of the SLRB in the case of the PDCP duplication.

Optionally, the method further includes:
sending, to the first terminal device, the sidelink frequency resource set available for each transmission path in the case of the PDCP duplication through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

The embodiment of the present disclosure further provides a terminal device, which is a first terminal device and is characterized by including a memory, a transceiver, and a processor;
the memory is configured to store a computer program; the transceiver is configured to send and receive data under the control of the processor; the processor is configured to read the computer program in the memory to implement the following:
obtaining, based on first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

Optionally, the processor is configured to read the computer program in the memory to implement the following:
sending the first information to a network device serving the first terminal device, and receiving, from the network device, the sidelink frequency resource set available for each transmission path in the case of the PDCP duplication, wherein the sidelink frequency resource set is determined by the network device based on the first information; or
determining, based on the first information, the sidelink frequency resource set available for each transmission path in the case of the PDCP duplication.

Optionally, the processor is configured to read the computer program in the memory to implement the following:
sending the first information to the network device through at least one of SidelinkUEInformation, UEAssistanceInformation or a Uu interface Radio Resource Control (RRC) signaling.

Optionally, the processor is further configured to read the computer program in the memory to implement the following:
obtaining, based on second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

Optionally, the processor is configured to read the computer program in the memory to implement the following:
sending the second information to the network device serving the first terminal device, and receiving, from the network device, the LCID corresponding to each transmission path of the SLRB in the case of the PDCP duplication, wherein the LCID is determined by the network device serving the first terminal based on the second information; or
determining, based on the second information, the LCID corresponding to each transmission path of the SLRB in the case of the PDCP duplication.

Optionally, the processor is configured to read the computer program in the memory to implement the following:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, the processor is further configured to read the computer program in the memory to implement the following:
sending the second information to the network device through at least one of SidelinkUEInformation, UEAssistanceInformation or a Uu interface Radio Resource Control (RRC) signaling.

Optionally, the processor is further configured to read the computer program in the memory to implement the following:
sending, to the second terminal device, the sidelink frequency resource set available for each transmission path in the case of the PDCP duplication through a configuration signaling of the sidelink PDCP duplication or an activation signaling of the sidelink PDCP duplication.

Optionally, the processor is further configured to read the computer program in the memory to implement the following:
when the first terminal device adopts a network-configured resource allocation mode, sending, to a network device, the sidelink frequency resource set available for each transmission path in the case of the PDCP duplication.

Optionally, the processor is further configured to read the computer program in the memory to implement the following:
for a logical channel corresponding to each transmission path of an SLRB in the case of the PDCP duplication, selecting a destination sidelink frequency resource from the sidelink frequency resource set corresponding to the transmission path, to perform data transmission.

The embodiment of the present disclosure further provides a network device, including a memory, a transceiver, and a processor;
wherein the memory is configured to store a computer program; the transceiver is configured to send and receive data under the control of the processor; the processor is configured to read the computer program in the memory to implement the following:
determining, for the first terminal device, based on the first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

The embodiment of the present disclosure further provides a frequency resource acquisition apparatus, applied to a first terminal device, including:
a first acquisition unit, configured to obtain, based on the first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of the sidelink frequency resource received by the first terminal device from the second terminal device.

The embodiment of the present disclosure further provides a frequency resource determination apparatus, applied to a network device, including:
a first determining unit, configured to determine, for the first terminal device, a sidelink frequency resource set available for each transmission path in the case of Packet Data Convergence Protocol (PDCP) duplication based on the first information;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

An embodiment of the present disclosure provides a processor-readable storage medium storing a computer program, wherein the computer program is used to cause the processor to execute the above method.

The beneficial effects of the present disclosure are as follows:
it obtains the sidelink frequency resource set available for each transmission path in the case of the PDCP duplication based on the first information, thereby realizing dynamic determination of the sidelink frequency resource set and improving the gain of the sidelink PDCP duplication.

### BRIEF DESCRIPTION OF THE DRAWINGS

In order to more clearly illustrate the technical solutions in the embodiments of the present disclosure or related art, a brief introduction to the accompanying drawings required for the description of the embodiments or related art is provided below. Obviously, the drawings described below are merely about some of the embodiments disclosed herein. For those of ordinary skill in the art, other drawings can be obtained based on these drawings without creative efforts.
Fig. 1 shows a schematic diagram of PDCP duplication;
Fig. 2 shows a schematic diagram of a flow chart of a frequency resource acquisition method according to an embodiment of the present disclosure;
Fig. 3 shows a schematic diagram of a flow chart of a frequency resource determination method according to an embodiment of the present disclosure;
Fig. 4 shows a detailed flowchart of a specific application scenario of an embodiment of the present disclosure;
Fig. 5 shows another detailed flowchart of a specific application scenario of an embodiment of the present disclosure;
Fig. 6 shows yet another detailed flowchart of a specific application scenario of an embodiment of the present disclosure;
Fig. 7 shows a schematic diagram of a unit of a frequency resource acquisition apparatus according to an embodiment of the present disclosure;
Fig. 8 shows a structural diagram of a terminal device according to an embodiment of the present disclosure;
Fig. 9 shows a schematic diagram of a unit of a frequency resource determination apparatus according to an embodiment of the present disclosure;
Fig. 10 shows a structural diagram of a network device according to an embodiment of the present disclosure.

### DETAILED DESCRIPTION

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without creative efforts also fall within the scope of the present disclosure.

Terms "first", "second" and the like in the specification and claims of the present disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment.

In the embodiments of the present disclosure, the term "and/or" describes the association between associated objects, indicating that there can be three relationships, for example, A and/or B can mean: A exists alone, A and B exist simultaneously, and B exists alone. The symbol "/" generally indicates that the associated objects are in an "or" relationship. In the embodiments of the present disclosure, the term "plurality" refers to two or more than two, and other quantifiers are similar to it.

In the embodiments of the present disclosure, the terms "exemplary" or "for example" are used to indicate examples, illustrations, or descriptions. Any embodiment or design described as "exemplary" or "for example" in the embodiments of the present disclosure should not be interpreted as being more preferred or more advantageous than other embodiments or designs. Specifically, the use of terms such as "exemplary" or "for example" is intended to present related concepts in a specific manner.

The relevant concepts mentioned in the present disclosure are briefly described below.

### 1. LTE sidelink interface Packet Data Convergence Protocol (PDCP) duplication mechanism

From the perspective of air interface design, the LTE sidelink interface only supports broadcast transmission.

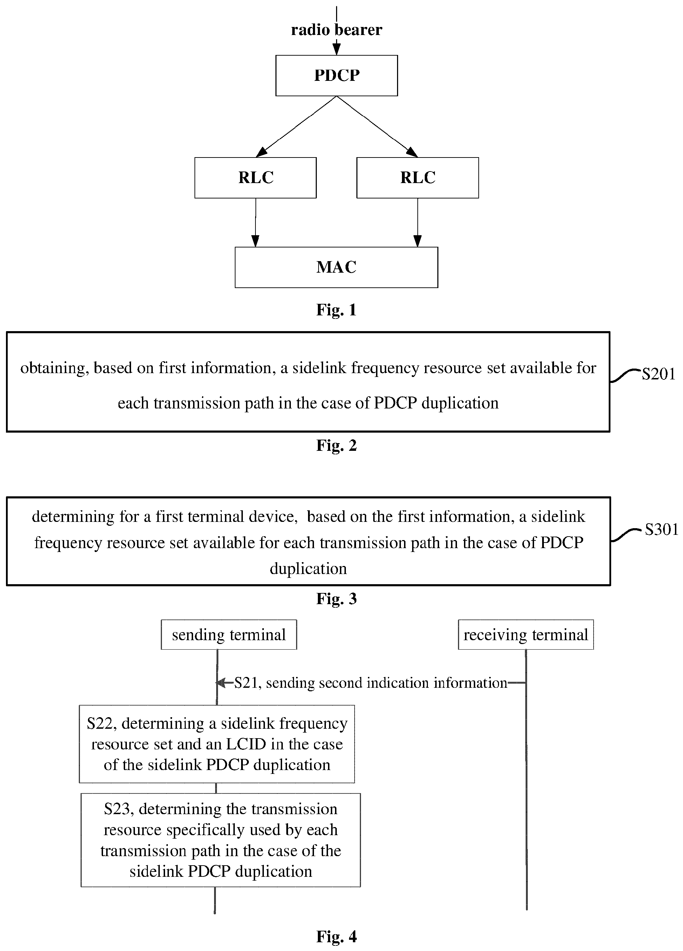

In order to improve the reliability of sidelink interface data transmission, a PDCP duplication mechanism is introduced. The PDCP duplication is a radio bearer (corresponding to a PDCP entity) at a PDCP layer, which is transmitted through multiple logical channels (each logical channel corresponds to an RLC entity) at the Radio Link Control (RLC) layer. The RLC entity transmits the data to a Media Access Control (MAC) layer, as shown in Fig. 1.

The establishment of the LTE sidelink interface radio bearer is entirely dependent on the terminal implementation, with no involvement from a base station. The base station only configures a Per ProSe Packet Reliability (PPPR) threshold, and the terminal directly determines whether to activate PDCP duplication based on whether the PPPR corresponding to the sidelink interface radio bearer is lower than the threshold.

For New Radio (NR) Sidelink (SL), unlike the LTE SL, it supports the sidelink unicast transmission mode. For the SL unicast transmission, the method of static configuration of a transmission path with an available carrier set in the LTE Packet Data Convergence Protocol (PDCP) duplication is not applicable to the NR SL unicast transmission mode.

The following describes an embodiment of the present disclosure in conjunction with the accompanying drawings. A frequency resource acquisition, determination method, apparatus, a terminal device, and a network device provided in the embodiment of the present disclosure may be applied to a wireless communication system. The wireless communication system may be a system using the fifth generation (5th Generation, 5G) mobile communication technology (hereinafter referred to as a 5G system). Those skilled in the art can understand that the 5G NR system is only an example, rather than being a limitation.

The embodiments of the present disclosure provide a frequency resource acquisition, determination method, apparatus, a terminal device and a network device, to solve the problem on how to configure a SL frequency resource set corresponding to each transmission path of SL PDCP duplication, thereby improving the gain of the SL PDCP duplication.

The method, apparatus and device are based on the same inventive concept. Since the principles for solving the problem are similar, the implementation of the apparatus, device and method can refer to each other, and redundant parts will not be repeated.

As shown in Fig. 2, an embodiment of the present disclosure provides a frequency resource acquisition method, which is performed by a first terminal device and includes:
step S201, obtaining, based on first information, a sidelink frequency resource set available for each transmission path in the case of Packet Data Convergence Protocol (PDCP) duplication;
the first information includes at least one of the following:
   A11. a combination of a layer 2 source address and a layer 2 destination address of a unicast connection between the first terminal device and a second terminal device;
   A12. first indication information, wherein the first indication information is indication information of a sidelink frequency resource determined by the first terminal device; or
   A13. second indication information, wherein the second indication information is indication information of a sidelink frequency resource received by the first terminal device from the second terminal device.

In the embodiments of the present disclosure, based on the first information, the sidelink frequency resource set available for each transmission path in the case of PDCP duplication is dynamically obtained, avoiding a problem where SL PDCP duplication performance is adversly affected by only being able to statically configure the sidelink frequency resource set.

Optionally, the first terminal device mentioned in the embodiment of the present disclosure refers to a sending terminal, that is, a terminal device that sends data during sidelink communication; the second terminal device refers to a receiving terminal, that is, a terminal device that receives data during sidelink communication.

Optionally, in another embodiment of the present disclosure, the sidelink frequency resource set available for each transmission path in the case of the PDCP duplication includes: a sidelink frequency resource set corresponding to each transmission path of a Sidelink Radio Bearer (SLRB) in the case of the PDCP duplication.

Optionally, in another embodiment of the present disclosure, a quantity of sidelink frequency resource sets is the same as a quantity of transmission paths in the case of the PDCP duplication.

That is to say, a quantity of sidelink frequency resource sets corresponds to a quantity of transmission paths of the SLRB in the case of PDCP duplication.

Optionally, in another embodiment of the present disclosure, the sidelink frequency resources in the sidelink frequency resource set include:
a sidelink carrier; and/or
a sidelink BandWidth Part (BWP).

Optionally, in another embodiment of the present disclosure, the sidelink frequency resource set includes one or more sidelink frequency resources.

Optionally, in the case that the sidelink frequency resource set includes at least two frequency resources, the method further includes:
for a logical channel corresponding to each transmission path of an SLRB in the case of the PDCP duplication, selecting a destination sidelink frequency resource from the sidelink frequency resource set corresponding to the transmission path, to perform data transmission.

It should be noted that, in this case, when the first terminal device adopts the resource determination method that is selected by the terminal itself, it is necessary to select a sidelink frequency resource from the sidelink frequency resource set for data transmission. For example, the first terminal device randomly selects a resource from the sidelink frequency resource set for use. It should be noted that the above-mentioned implementation method of randomly selecting a resource from the sidelink frequency resource set is only an example, and any implementation method of selecting a resource from the sidelink frequency resource set belongs to the protection scope of the present disclosure.

Optionally, in an embodiment of the present disclosure, the first indication information includes at least one of the following:
A121. a Channel Busy Ratio (CBR) or a Channel Occupy (CO) of the first terminal device on each sidelink frequency resource;
A122. a sidelink interface parameter of the first terminal device on each sidelink frequency resource;
the sidelink interface parameter includes: Sidelink-Channel State Information (SL-CSI), Sidelink-Reference Signal Receiving Power (SL-RSRP) or Sidelink Discover-Reference Signal Receiving Power (SD-RSRP);
A123. a sidelink frequency resource set that is expected by the first terminal device and corresponds to a transmission path in the case of the sidelink PDCP duplication; or
A124. a sidelink frequency resource set that is expected by the first terminal device and can be used in the case of the sidelink PDCP duplication.

Optionally, in an embodiment of the present disclosure, the second indication information includes at least one of the following:
A131. a CBR or a CO of the second terminal device on each sidelink frequency resource;
A132. a sidelink parameter of the second terminal device on each sidelink frequency resource;
A133. a sidelink parameter frequency resource set that is expected by the second terminal device and corresponds to the transmission path in the case of the sidelink PDCP duplication; or
A134. a sidelink parameter frequency resource set that is expected by the second terminal device and can be used in the case of the sidelink PDCP duplication.

It should be noted that the second indication information is usually sent by the second terminal device to the first terminal device. Specifically, the second terminal device sends the second indication information to the first terminal device through a sidelink interface.

It should be noted that, in the embodiments of the present disclosure, two methods are provided for the first terminal device to obtain the sidelink frequency resource set available for each transmission path in the case of the PDCP duplication. One of the two methods is that the first terminal device directly determines it based on the first information, that is, the first terminal device determines the sidelink frequency resource set available for each transmission path in the case of the PDCP duplication based on the first information. The other method is that the first terminal device directly receives the sidelink frequency resource set available for each transmission path sent by the network device in the case of the PDCP duplication, that is, the first terminal device sends the first information to the network device serving the first terminal device, and receives the sidelink frequency resource set available for each transmission path sent by the network device in the case of the PDCP duplication. The sidelink frequency resource set is determined by the network device based on the first information. The following describes these two implementation methods in detail.

Method 1: the first terminal device directly determines it based on the first information.

In this implementation, the method by which the first terminal device determines the sidelink frequency resource set includes one of the following:
B11. determining a currently available SL frequency resource set based on the first information, and then sorting the SL frequency resources in the SL frequency resource set in an ascending order based on a CBR or a CO, and then allocating the SL frequency resources in sequence to each transmission path of the sidelink PDCP duplication.

It should be noted that, in this method of determining the sidelink frequency resource set, each sidelink frequency resource set includes only one sidelink frequency resource.

B12. determining the currently available SL frequency resource set based on the first information, and then randomly allocating, based on a quantity of transmission paths for the sidelink PDCP duplication, the SL frequency resources in the SL frequency resource set into groups with a quantity that is same as a quantity of transmission paths, and using each group of SL frequency resources as the SL frequency resource set corresponding to the next transmission of the sidelink PDCP duplication.

It should be noted that, in this method of determining the sidelink frequency resource set, each sidelink frequency resource set generally includes one or more (i.e., at least two) sidelink frequency resources.

Optionally, in this case, after the first terminal determines and obtains the sidelink frequency resource set, it should also send the sidelink frequency resource set available for each transmission path in the case of the PDCP duplication to the second terminal device through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

Optionally, in this case, when the first terminal device adopts the network-configured resource allocation mode, the first terminal device should also send the sidelink frequency resource set available for each transmission path in the case of the PDCP duplication to the network device, so as to facilitate the network device to use the sidelink frequency resource set.

Method 2: the first terminal device directly receives, from the network device, the sidelink frequency resource set available for each transmission path in the case of the PDCP duplication

Optionally, in this implementation, the sending the first information to a network device serving the first terminal device includes:
sending the first information to the network device through at least one of SidelinkUEInformation, UEAssistanceInformation or a Uu interface Radio Resource Control (RRC) signaling.

Optionally, in this case, after the first terminal device obtains the sidelink frequency resource set sent by the network device, it should also send the sidelink frequency resource set available for each transmission path in the case of the PDCP duplication to the second terminal device through a configuration signaling of the sidelink PDCP duplication or an activation signaling of the sidelink PDCP duplication.

Optionally, the activation signaling of the sidelink PDCP duplication includes at least one of the following: an RRC signaling, MAC CE or a physical layer signaling.

It should also be noted that the method in which the network device determines the sidelink frequency resource set available for each transmission path in the case of PDCP duplication may adopt the above-mentioned B11 or B12.

Optionally, in another embodiment of the present disclosure, the method further includes:
obtaining, based on second information, a Logical Channel Identity (LCID) corresponding to each transmission path of a Sidelink Radio Bearer (SLRB) in the case of the PDCP duplication.

Specifically, the first terminal device may adopt one of the following methods to obtain the LCID corresponding to each transmission path of the SLRB in the case of the PDCP duplication:
C11. determining, based on the second information, the LCID corresponding to each transmission path of the SLRB in the case of the PDCP duplication;
this case refers to that the first terminal device determining the LCID corresponding to each transmission path of the SLRB in the case of the PDCP duplication based on the second information.

Optionally, a specific implementation method in which the first terminal device determines the LCID corresponding to each transmission path may include one of the following:
C111. randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication.

It should be noted that, in this implementation, N LCIDs are randomly determined and then assigned to N transmission paths. The available LCID can be understood as the LCID corresponding to the unoccupied logical channel, or simply referred to as the unoccupied LCID; that is, the sidelink sending terminal may randomly select the same quantity of LCIDs as the sidelink PDCP duplication transmission paths from the currently unoccupied LCIDs, and use the selected LCIDs as the LCIDs corresponding to each transmission path.

C112. randomly selecting a first LCID from a first LCID set as an LCID of one transmission path in the sidelink PDCP duplication, and determining, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

It should be noted that, in this case, the LCID corresponding to one transmission path is first determined, and the LCID of another path is associated with the LCID of the already determined transmission path, and the association may be a protocol agreement or a network device configuration. For example, the difference between the LCID of the other path and the LCID of the determined transmission path is less than or equal to a certain threshold; for another example, the LCID of the other path and the LCID of the determined transmission path form an arithmetic or geometric sequence, etc.; for example, with respect to an LCH with the LCID =2, an associated LCID of SL PDCP duplication is LCID=12. It should be noted that this is only an example of the association, and any method of determining the LCID of other path by means of an association falls within the protection scope of the present disclosure.

That is to say, the sidelink sending terminal may randomly select an unoccupied LCID in the first LCID set as the LCID of one transmission path in the sidelink PDCP duplication, and then determine the LCID corresponding to the other transmission path based on the LCID and the pre-agreed association between the LCIDs of different transmission paths in the case of the sidelink PDCP duplication.

C12. sending the second information to the network device serving the first terminal device, and receiving the LCID corresponding to each transmission path of the SLRB sent by the network device in the case of the PDCP duplication, wherein the LCID is determined by the network device serving the first terminal based on the second information.

It should be noted that, in this case, the LCID corresponding to each transmission path is determined by the network device based on the second information and transmitted to the first terminal device; optionally, the network device usually adopts C111 or C112 to determine the LCID corresponding to each transmission path.

Optionally, in this case, the first terminal device sends the second information to the network device through at least one of SidelinkUEInformation, UEAssistanceInformation or a Uu interface Radio Resource Control (RRC) signaling.

It should be noted that the second information includes at least one of the following:
C21, an LCID available for the first terminal device in the unicast connection between the first terminal device and the second terminal device;
C22, an LCID that is recommended by the first terminal device in the unicast connection between the first terminal device and the second terminal device and used for sidelink PDCP duplication; or
C23. an LCID that is reserved for sidelink PDCP duplication by the first terminal device in the unicast connection between the first terminal device and the second terminal device.

It should be noted that the method for configuring the sidelink duplication resource is provided through at least one embodiment of the present disclosure. This method can solve the problem on how the sidelink sending terminal or the network device to which the sidelink sending terminal belongs configures the sidelink frequency resource set corresponding to each transmission path under the sidelink PDCP duplication, thereby better improving the gain of the sidelink PDCP duplication.

The technical solutions provided by the embodiments of the present disclosure can be applied to a variety of systems, especially 5G systems. For example, the applicable system may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

The terminal device involved in the embodiments of the present disclosure may be a device that provides voice and/or data connectivity to users, a handheld device with a wireless connection function, or another processing device connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, a portable, pocket-sized, handheld, computer-built-in or vehicle-mounted mobile device, which exchanges audio and/or data with a radio access network. For example, it may be a Personal Communication Service (PCS) phone, cordless phone, Session Initiated Protocol (SIP) phone, Wireless Local Loop (WLL) stations, Personal Digital Assistants (PDAs), or another device. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present disclosure.

The network device involved in the embodiments of the present disclosure may be a base station, and the base station may include multiple cells that provide services to terminals. Depending on the specific application, a base station can also be called an access point, or it can be a device in the access network that communicates with wireless terminal devices through one or more sectors on the air interface, or it can be named by another name. A network device can be used to exchange received radio frames with Internet Protocol (IP) packets and act as a router between the wireless terminal device and the rest of the access network, wherein the rest of the access network can include the IP communications network. The network device may also coordinate attribute management of the air interface. For example, the network device involved in the embodiments of the present disclosure may be a network device (Base Transceiver Station, BTS) in Global System for Mobile communications (GSM) or Code Division Multiple Access (CDMA), or it can be a network device (NodeB) in a Wide-band Code Division Multiple Access (WCDMA) system, or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which is not limited in the embodiments of the present disclosure. In some network structures, network devices may include a Centralized Unit (CU) node and Distributed Unit (DU) nodes, and the centralized unit and the distributed units may also be arranged geographically separately.

The network device and the terminal device may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may include two Dimensional-MIMO antennas (2D-MIMO), three Dimensional-MIMO antennas (3D-MIMO), Full Dimensional-MIMO (FD-MIMO) antennas or massive-MIMO antennas, and may be diversity transmission, precoded transmission, beam forming transmission, or the like.

As shown in Fig. 3, an embodiment of the present disclosure provides a method for determining frequency resources, which is performed by a network device and includes:
Step S301, determining, for a first terminal device, a sidelink frequency resource set available for each transmission path in the case of Packet Data Convergence Protocol (PDCP) duplication based on the first information;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

Optionally, the method further includes:
receiving first information sent by a first terminal device.

Optionally, the receiving the first information sent by the first terminal device includes:
receiving the first information sent by the first terminal device through at least one of SidelinkUEInformation, UEAssistanceInformation or a Uu interface Radio Resource Control (RRC) signaling.

Optionally, the method further includes:
determining, based on the second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

Optionally, the determining, based on the second information, a Logical Channel Identity (LCID) corresponding to each transmission path of a Sidelink Radio Bearer (SLRB) in the case of the PDCP duplication includes:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, the method further includes:
receiving the second information sent by the first terminal device.

Optionally, the receiving the second information sent by the first terminal device includes:
receiving the second information sent by the first terminal device through at least one of SidelinkUEInformation, UEAssistanceInformation or a Uu interface Radio Resource Control (RRC) signaling.

Optionally, the method further includes:
sending, to the first terminal device, the Logical Channel Identity (LCID) corresponding to each transmission path of the SLRB in the case of the PDCP duplication.

Optionally, the method further includes:
sending, to the first terminal device, the sidelink frequency resource set available for each transmission path in the case of the PDCP duplication through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

Optionally, the first indication information includes at least one of the following:
a Channel Busy Ratio (CBR) or a Channel Occupy (CO) of the first terminal device on each sidelink frequency resource;
a sidelink interface parameter of the first terminal device on each sidelink frequency resource, wherein the sidelink interface parameter includes: Sidelink-Channel State Information (SL-CSI), Sidelink-Reference Signal Receiving Power (SL-RSRP) or Sidelink Discover-Reference Signal Receiving Power (SD-RSRP);
a sidelink frequency resource set that is expected by the first terminal device and corresponds to a transmission path in the case of the sidelink PDCP duplication; or
a sidelink frequency resource set that is expected by the first terminal device and can be used in the case of the sidelink PDCP duplication.

Optionally, the second indication information includes at least one of the following:
a CBR or a CO of the second terminal device on each sidelink frequency resource;
a sidelink parameter of the second terminal device on each sidelink frequency resource;
a sidelink parameter frequency resource set that is expected by the second terminal device and corresponds to the transmission path in the case of the sidelink PDCP duplication; or
a sidelink parameter frequency resource set that is expected by the second terminal device and can be used in the case of the sidelink PDCP duplication.

Optionally, the sidelink frequency resource set available for each transmission path in the case of the PDCP duplication includes: a sidelink frequency resource set corresponding to each transmission path of the Sidelink Radio Bearer (SLRB) in the case of the PDCP duplication.

Optionally, a quantity of sidelink frequency resource sets is the same as a quantity of transmission paths in the case of the PDCP duplication.

Optionally, the sidelink frequency resources in the sidelink frequency resource set include:
a sidelink carrier; and/or
a sidelink BandWidth Part (BWP).

It should be noted that all implementation methods in the above embodiments are applicable to the embodiments of the frequency resource determination method applied to the network device side, and can achieve the same technical effect, which will not be repeated here.

The specific applications of the present disclosure are described in detail below from the perspectives of the sending terminal and the receiving terminal.

Application scenario 1: the sending terminal determines the sidelink frequency resource set available for each transmission path and the LCID corresponding to each transmission path in the case of the PDCP duplication

The main processes include the following steps.

Step S11: the sidelink sending terminal determines a sidelink frequency resource set available for each transmission path and an LCID corresponding to each transmission path in the case of the sidelink PDCP duplication.

It should be noted that, in this case, the sidelink sending terminal determines the LCID corresponding to each transmission path and the sidelink frequency resource set corresponding to each transmission path of a Sidelink Radio Bearer (SLRB) in the case of the PDCP duplication.

Specifically, how the sidelink sending terminal determines the LCID corresponding to each transmission path and the sidelink frequency resource set corresponding to each transmission path of the SLRB in the case of sidelink PDCP duplication may depend on the implementation of the sidelink sending terminal. An example is as follows:
the LCID determination method may be, but is not limited to, one of the following:
the sidelink sending terminal may randomly select LCIDs with the same quantity as transmission paths in the sidelink PDCP duplication from currently unoccupied LCIDs, and use the selected LCIDs as the LCIDs corresponding to each transmission path; or
the sidelink sending terminal may randomly select an unoccupied LCID in the first LCID set as the LCID of a transmission path in the sidelink PDCP duplication, and then determine the LCIDs corresponding to other transmission paths based on the LCID and the pre-agreed association between the LCIDs of different transmission paths in the case of the sidelink PDCP duplication.

The first LCID set includes: a LCID available for the sidelink interface of the first terminal device and the second terminal device.

The method for determining the sidelink frequency resource set corresponding to each transmission path may include, but is not limited to, one of the following:
determining a currently available SL frequency resource set based on the first information, then sorting the SL frequency resources in the SL frequency resource set in ascending order based on a CBR or a CO, and then allocating the SL frequency resources in sequence to each transmission path of the sidelink PDCP duplication; or
determining the currently available SL frequency resource set based on the first information, and then randomly allocating the SL frequency resources in the SL frequency resource set into the same quantity of groups as a quantity of transmission paths based on a quantity of transmission paths for the sidelink PDCP duplication, and using each group of SL frequency resources as the SL frequency resource set corresponding to the next transmission of the sidelink PDCP duplication.

The content of the first information may be, but is not limited to, one or a combination of the following:
a combination of a layer 2 source address and a layer 2 destination address of a unicast connection between a sending terminal device and a receiving terminal device;
the CBR or the CO of the sending terminal device on each sidelink frequency resource;
the SL-CSI, the SL-RSRP or the SD-RSRP of the sending terminal device on each sidelink frequency resource.

Step S12: the sidelink sending terminal determines the transmission resource specifically used by each transmission path in the case of the sidelink PDCP duplication.

When the quantity of sidelink frequency resources in the sidelink frequency resource set determined in the step S12 may be multiple, and the sidelink sending terminal uses the resource allocation mode selected by the terminal itself, then the sidelink sending terminal needs to uniquely select one sidelink frequency resource from each sidelink frequency resource set. The specific selection method may be: for the logical channel corresponding to each transmission path of the SLRB in the case of the PDCP duplication, select a destination sidelink frequency resource from the sidelink frequency resource set corresponding to the transmission path, and use the selected unique sidelink frequency resource to perform data transmission on the transmission path.

Application scenario 2: the sending terminal determines the sidelink frequency resource set available for each transmission path and the LCID corresponding to each transmission path in the case of the PDCP duplication.

As shown in Fig. 4, the main process includes the following steps.

Step S21, the sidelink sending terminal receives second indication information sent by the sidelink receiving terminal through the sidelink interface.

The sidelink sending terminal receives second indication information sent by the sidelink receiving terminal through the sidelink interface, wherein the second indication information is used to assist the sidelink sending terminal in determining the sidelink frequency resource set available in the case of the sidelink PDCP duplication.

The content of the second indication information may be, but is not limited to, one or more of the following:
the CBR or the CO of the receiving terminal device on each sidelink frequency resource;
a sidelink parameter of the receiving terminal device on each sidelink frequency resource;
a sidelink parameter frequency resource set that corresponds to the transmission path in the case of the sidelink PDCP duplication and expected by a receiving terminal device;
a sidelink parameter frequency resource set that can be used in the case of the sidelink PDCP duplication and expected by the receiving terminal device.

Step S22, the sidelink sending terminal determines a sidelink frequency resource set and an LCID in the case of the sidelink PDCP duplication.

In this embodiment, the sidelink sending terminal determines the LCID corresponding to each transmission path and the sidelink frequency resource set corresponding to each transmission path of a Sidelink Radio Bearer (SLRB) in the case of the PDCP duplication.

Specifically, how the sidelink sending terminal determines the LCID corresponding to each transmission path and the sidelink frequency resource set corresponding to each transmission path of the SLRB in the case of the PDCP duplication depends on the implementation of the sidelink sending terminal. An example is as follows.

The LCID determination method may be, but is not limited to, one of the following:
the sidelink sending terminal may randomly select LCIDs with the same quantity as transmission paths in the sidelink PDCP duplication from currently unoccupied LCIDs, and use the selected LCIDs as the LCIDs corresponding to each transmission path; or
the sidelink sending terminal may randomly select an unoccupied LCID in the first LCID set as the LCID of a transmission path in the sidelink PDCP duplication, and then determine the LCIDs corresponding to other transmission paths based on the LCID and the pre-agreed association between the LCIDs of different transmission paths in the case of the sidelink PDCP duplication.

The first LCID set includes: a LCID available for the sidelink interface of the first terminal device and the second terminal device.

The method for determining the sidelink frequency resource set corresponding to each transmission path may include, but is not limited to, one of the following:
determining a currently available SL frequency resource set based on the first information, then sorting the SL frequency resources in the SL frequency resource set in ascending order based on the CBR or the CO, and then allocating the SL frequency resources in sequence to each transmission path of the sidelink PDCP duplication; or
determining the currently available SL frequency resource set based on the first information, and then randomly allocating the SL frequency resources in the SL frequency resource set into the same quantity of groups as a quantity of transmission paths based on a quantity of transmission paths for the sidelink PDCP duplication, and using each group of SL frequency resources as the SL frequency resource set corresponding to the next transmission of the sidelink PDCP duplication.

The first information includes, but is not limited to, one or more of the following:
a combination of a layer 2 source address and a layer 2 destination address of a unicast connection between a sending terminal device and a receiving terminal device;
the CBR or the CO of the sending terminal device on each sidelink frequency resource;
the SL-CSI, SL-RSRP or SD-RSRP of the sending terminal device on each sidelink frequency resource;
a sidelink frequency resource set that corresponds to a transmission path in the case of the sidelink PDCP duplication and expected by a sending terminal device;
a sidelink frequency resource set that can be used in the case of the sidelink PDCP duplication and expected by the sending terminal device;
the second indication information received from the receiving terminal.

Step S23, the sidelink sending terminal determines the transmission resource specifically used by each transmission path in the case of the sidelink PDCP duplication.

When the quantity of sidelink frequency resources in the sidelink frequency resource set determined in the step S22 may be multiple, and the sidelink sending terminal uses the resource allocation mode selected by the terminal itself, then the sidelink sending terminal needs to uniquely select one sidelink frequency resource from each sidelink frequency resource set. The specific selection method may include: for the logical channel corresponding to each transmission path of the SLRB in the case of the PDCP duplication, selecting a destination sidelink frequency resource from the sidelink frequency resource set corresponding to the transmission path, and using the selected unique sidelink frequency resource to perform data transmission on the transmission path.

Application scenario 3: the network device serving the sending terminal determines the sidelink frequency resource set available for each transmission path and the LCID corresponding to each transmission path in the case of the PDCP duplication.

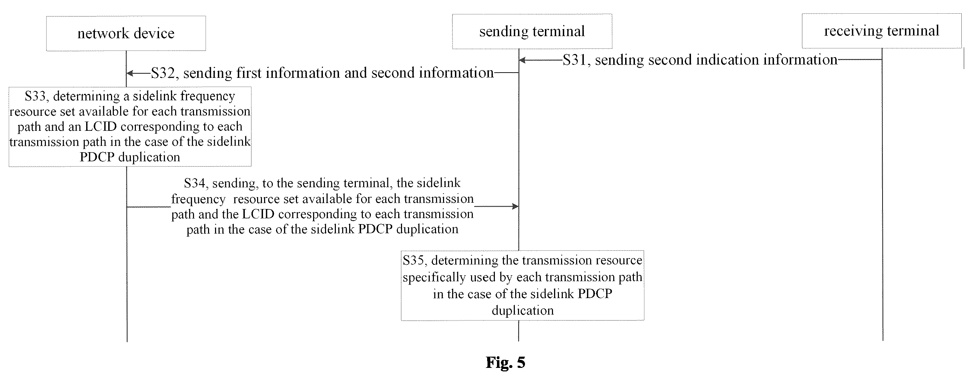

As shown in Fig. 5, the main process includes the following steps.

Step S31, the sidelink sending terminal receives second indication information sent by the sidelink receiving terminal through the sidelink interface.

The sidelink sending terminal receives second indication information sent by the sidelink receiving terminal through the sidelink interface, wherein the second indication information is used to assist the network device corresponding to the sidelink sending terminal in determining the available sidelink frequency resource set in the case of the sidelink PDCP duplication.

The content of the second indication information may be, but is not limited to, one or more of the following:
the CBR or the CO of the receiving terminal device on each sidelink frequency resource;
a sidelink parameter of the receiving terminal device on each sidelink frequency resource;
a sidelink parameter frequency resource set that corresponds to the transmission path in the case of the sidelink PDCP duplication and is expected by a receiving terminal device;
a sidelink parameter frequency resource set that can be used in the case of duplication of the sidelink interface PDCP and expected by the receiving terminal device.

Step S32, the sidelink sending terminal sends the first information and the second information to the network device serving the sidelink sending terminal;
the first information includes, but is not limited to, one or more of the following:
a combination of a layer 2 source address and a layer 2 destination address of a unicast connection between a sending terminal device and a receiving terminal device;
the CBR or the CO of the sending terminal device on each sidelink frequency resource;
the SL-CSI, SL-RSRP or SD-RSRP of the sending terminal device on each sidelink frequency resource;
a sidelink frequency resource set that corresponds to a transmission path in the case of the sidelink PDCP duplication and is expected by a sending terminal device;
a sidelink frequency resource set that can be used in the case of the sidelink PDCP duplication and is expected by the sending terminal device;
the second indication information received from the receiving terminal.

The first information may adopt SidelinkUEInformation or UEAssistanceInformation in the related art or a new Uu interface RRC signaling.

The second information includes, but is not limited to, one or more of the following:
an LCID available for the sending terminal device in a unicast connection between the sending terminal device and the receiving terminal device;
an LCID recommended by the sending terminal device for the sidelink PDCP duplication in the unicast connection between the sending terminal device and the receiving terminal device;
an LCID reserved by the sending terminal device for the sidelink PDCP duplication under a unicast connection between the sending terminal device and the receiving terminal device.

Step S33, determining, by the network device serving the sidelink sending terminal, a sidelink frequency resource set available for each transmission path and an LCID corresponding to each transmission path in the case of the sidelink PDCP duplication.

The network device determines the LCID corresponding to each transmission path of the SLRB in the case of the sidelink PDCP duplication based on the second information, and determines the sidelink frequency resource set corresponding to each transmission path of the SLRB in the case of the sidelink PDCP duplication based on the first information.

The LCID determination method may be, but is not limited to, one of the following:
the sidelink sending terminal may randomly select LCIDs with the same quantity as the transmission path of the sidelink PDCP duplication from the currently unoccupied LCIDs, and use the selected LCIDs as the LCIDs corresponding to each transmission path; or
the sidelink sending terminal may randomly select an unoccupied LCID in the first LCID set as the LCID of a transmission path in the sidelink PDCP duplication, and then determine the LCIDs corresponding to other transmission paths based on the LCID and the pre-agreed association between the LCIDs of different transmission paths in the case of the sidelink PDCP duplication.

The first LCID set includes: a LCID available for the sidelink interface of the first terminal device and the second terminal device.

The method for determining the sidelink frequency resource set corresponding to each transmission path may include, but is not limited to, one of the following:
determining a currently available SL frequency resource set based on the first information, then sorting the SL frequency resources in the SL frequency resource set in ascending order based on the CBR or the CO, and then allocating the SL frequency resources in sequence to each transmission path of the sidelink PDCP duplication; or
determining the currently available SL frequency resource set based on the first information, and then randomly allocating the SL frequency resources in the SL frequency resource set into the same quantity of groups as a quantity of transmission paths based on a quantity of transmission paths for the sidelink PDCP duplication, and using each group of SL frequency resources as the SL frequency resource set corresponding to the next transmission of the sidelink PDCP duplication.

Furthermore, when the sending terminal uses the network-scheduled resource allocation mode, after the network device determines the sidelink frequency resource set corresponding to each transmission path, it will further select a unique sidelink frequency resource for each transmission path, and allocate resources to the SLRB on the selected unique sidelink frequency resource.

Step S34, the network device sends the sidelink frequency resource set available for each transmission path and the LCID corresponding to each transmission path in the case of the sidelink PDCP duplication to the sending terminal.

Step S35, the sidelink sending terminal determines the transmission resource specifically used by each transmission path in the case of the sidelink PDCP duplication.

When the quantity of sidelink frequency resources in the sidelink frequency resource set determined in the step S33 may be multiple, and the sidelink sending terminal uses the resource allocation mode selected by the terminal itself, then the sidelink sending terminal needs to uniquely select one sidelink frequency resource from each sidelink frequency resource set. The specific selection method may be: for the logical channel corresponding to each transmission path of the SLRB in the case of the PDCP duplication, selecting a destination sidelink frequency resource from the sidelink frequency resource set corresponding to the transmission path, and using the selected unique sidelink frequency resource to perform data transmission on the transmission path.

Application scenario 4: the network device serving the sending terminal determines the sidelink frequency resource set available for each transmission path in the case of the PDCP duplication, and the sending terminal determines the LCID corresponding to each transmission path in the case of the PDCP duplication.

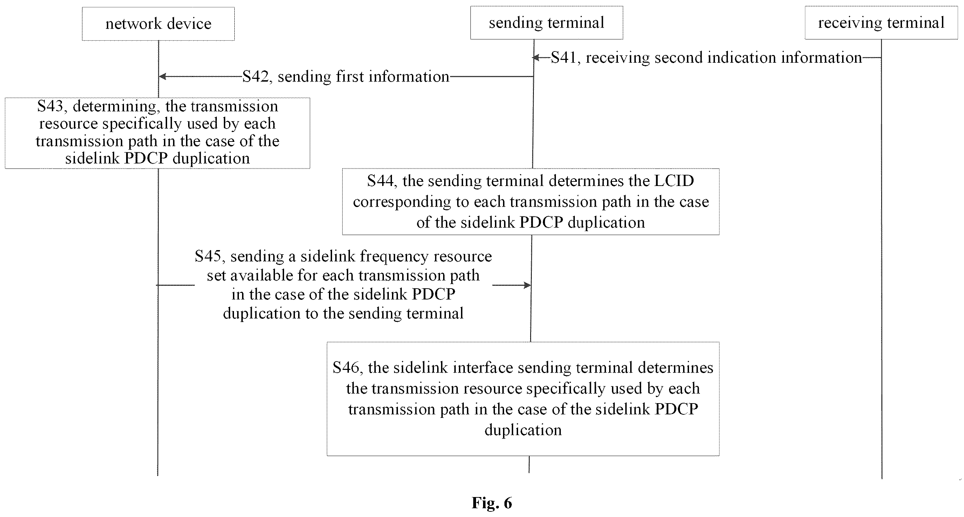

As shown in Fig. 6, the main process includes the following steps.

Step S41, the sidelink sending terminal receives second indication information sent by the sidelink receiving terminal through the sidelink interface.

The sidelink sending terminal receives second indication information sent by the sidelink receiving terminal through the sidelink interface, and the second indication information is used to assist the sidelink sending terminal or the network device corresponding to the sidelink sending terminal to determine the available sidelink frequency resource set in the case of the sidelink PDCP duplication.

The content of the second indication information may be, but is not limited to, one or more of the following:
the CBR or the CO of the receiving terminal device on each sidelink frequency resource;
a sidelink parameter of the receiving terminal device on each sidelink frequency resource;
a sidelink parameter frequency resource set that corresponds to the transmission path in the case of the sidelink PDCP duplication and is expected by a receiving terminal device;
a sidelink parameter frequency resource set that can be used in the case of duplication of the sidelink interface PDCP and expected by the receiving terminal device.

Step S42, the sidelink sending terminal sends first information to the network device serving the sidelink sending terminal.

The first information includes, but is not limited to, one or more of the following:
a combination of a layer 2 source address and a layer 2 destination address of a unicast connection between a sending terminal device and a receiving terminal device;
the CBR or the CO of the sending terminal device on each sidelink frequency resource;
the SL-CSI, SL-RSRP or SD-RSRP of the sending terminal device on each sidelink frequency resource;
a sidelink frequency resource set that corresponds to a transmission path in the case of the sidelink PDCP duplication and is expected by a sending terminal device;
a sidelink frequency resource set that can be used in the case of the sidelink PDCP duplication and is expected by the sending terminal device;
the second indication information received from the receiving terminal.

The first information may adopt SidelinkUEInformation or UEAssistanceInformation in the related art or a new Uu interface RRC signaling.

Step S43, the network device serving the sidelink sending terminal determines the transmission resource specifically used by each transmission path in the case of the sidelink PDCP duplication.

The network device determines, based on the first information, a sidelink frequency resource set corresponding to each transmission path of the SLRB in the case of the sidelink PDCP duplication.

The method for determining the sidelink frequency resource set corresponding to each transmission path may include, but is not limited to, one of the following:
determining a currently available SL frequency resource set based on the first information, then sorting the SL frequency resources in the SL frequency resource set in ascending order based on the CBR or the CO, and then allocating the SL frequency resources in sequence to each transmission path of the sidelink PDCP duplication; or
determining the currently available SL frequency resource set based on the first information, and then randomly allocating the SL frequency resources in the SL frequency resource set into the same quantity of groups as a quantity of transmission paths based on a quantity of transmission paths for the sidelink PDCP duplication, and using each group of SL frequency resources as the SL frequency resource set corresponding to the next transmission of the sidelink PDCP duplication.

Furthermore, when the sending terminal uses the network-scheduled resource allocation mode, after the network device determines the sidelink frequency resource set corresponding to each transmission path, it will further select a unique sidelink frequency resource for each transmission path, and allocate resources to the SLRB on the selected unique sidelink frequency resource.

Step S44, the sending terminal determines the LCID corresponding to each transmission path in the case of the sidelink PDCP duplication.

The LCID determination method may be, but is not limited to, one of the following:
the sidelink sending terminal may randomly select LCIDs with the same quantity as transmission paths in the sidelink PDCP duplication from currently unoccupied LCIDs, and use the selected LCIDs as the LCIDs corresponding to each transmission path; or
the sidelink sending terminal may randomly select an unoccupied LCID in the first LCID set as the LCID of a transmission path in the sidelink PDCP duplication, and then determine the LCIDs corresponding to other transmission paths based on the LCID and the pre-agreed association between the LCIDs of different transmission paths in the case of the sidelink PDCP duplication.

The first LCID set includes: a LCID available for the sidelink interface of the first terminal device and the second terminal device.

Step S45, the network device sends a sidelink frequency resource set available for each transmission path in the case of the sidelink PDCP duplication to the sending terminal.

Step S46, the sidelink sending terminal determines the transmission resource specifically used by each transmission path in the case of the sidelink PDCP duplication.

After receiving the configuration information, the sidelink sending terminal associates the LCID determined by it with the sidelink frequency resource or frequency resource set used by each transmission path.

When the quantity of sidelink frequency resources in the sidelink frequency resource set determined in the step S43 may be multiple, and the sidelink sending terminal uses the resource allocation mode selected by the terminal itself, then the sidelink sending terminal needs to uniquely select one sidelink frequency resource from each sidelink frequency resource set. The specific selection method may be that: for the logical channel corresponding to each transmission path of the SLRB in the case of the PDCP duplication, selecting a destination sidelink frequency resource from the sidelink frequency resource set corresponding to the transmission path, and using the selected unique sidelink frequency resource to perform data transmission on the transmission path.

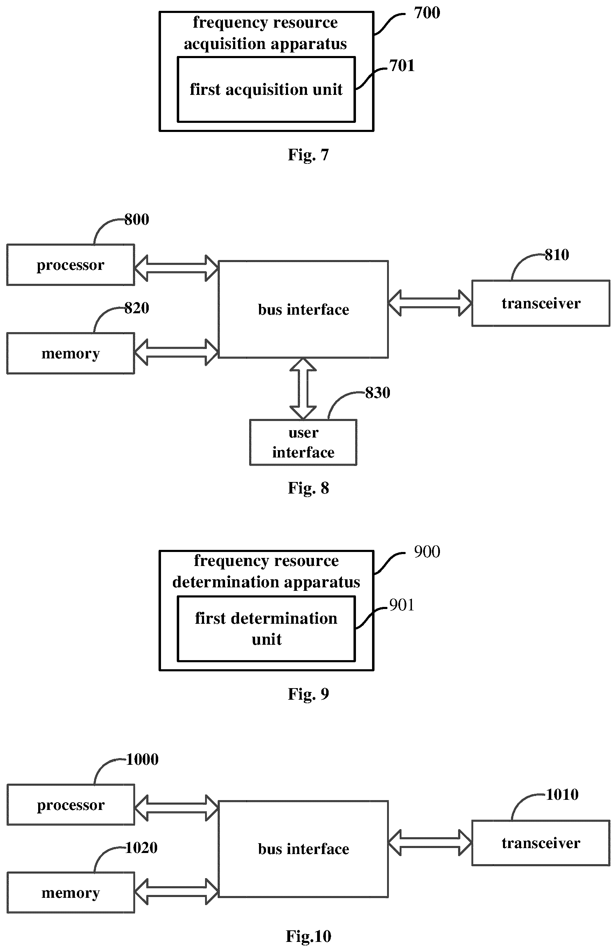

As shown in Fig. 7, embodiments of the present disclosure provide a frequency resource acquisition apparatus 700, applied to a first terminal device, including:
a first acquisition unit 701, configured to obtain, based on the first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

Optionally, a first acquisition unit 701 is configured to:
send the first information to a network device serving the first terminal device, and receive, from the network device, the sidelink frequency resource set available for each transmission path in the case of the PDCP duplication, wherein the sidelink frequency resource set is determined by the network device based on the first information; or
determine, based on the first information, the sidelink frequency resource set available for each transmission path in the case of the PDCP duplication.

Optionally, the sidelink frequency resource set available for each transmission path in the case of the PDCP duplication includes: a sidelink frequency resource set corresponding to each transmission path of the Sidelink Radio Bearer (SLRB) in the case of the PDCP duplication.

Optionally, a quantity of sidelink frequency resource sets is the same as a quantity of transmission paths in the case of the PDCP duplication.

Optionally, the sidelink frequency resources in the sidelink frequency resource set include:
a sidelink carrier; and/or
a sidelink BandWidth Part (BWP).

Optionally, a first acquisition unit 701 is configured to:
send the first information to the network device through at least one of SidelinkUEInformation, UEAssistanceInformation or a Uu interface Radio Resource Control (RRC) signaling.

Optionally, the apparatus further includes:
a second acquisition unit, configured to obtain, based on the second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

Optionally, a second acquisition unit is configured to:
send the second information to the network device serving the first terminal device, and receive, from the network device, the LCID corresponding to each transmission path of the SLRB in the case of the PDCP duplication, wherein the LCID is determined by the network device serving the first terminal based on the second information; or
determine, based on the second information, the LCID corresponding to each transmission path of the SLRB in the case of the PDCP duplication.

Optionally, a second acquisition unit is configured to:
randomly select N LCIDs from available LCIDs, and assign the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly select a first LCID from a first LCID set as an LCID of one transmission path in the sidelink PDCP duplication, and determine, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, a second acquisition unit is configured to:
send the second information to the network device through at least one of SidelinkUEInformation, UEAssistanceInformation or a Uu interface Radio Resource Control (RRC) signaling.

Optionally, the apparatus further includes:
a first sending unit, configured to send a sidelink frequency resource set available for each transmission path in the case of the PDCP duplication to the second terminal device through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

Optionally, after the first execution unit determines, based on the first information, a sidelink frequency resource set available for each transmission path in the case of Packet Data Convergence Protocol (PDCP) duplication, the apparatus further includes:
a second sending unit, configured to send the sidelink frequency resource set available for each transmission path in the case of the PDCP duplication to the network device when the first terminal device adopts the network-configured resource allocation mode.

Optionally, the sidelink frequency resource set includes one or more sidelink frequency resources.

Optionally, in the case that the sidelink frequency resource set includes at least two frequency resources, the apparatus further includes:
a selection unit, configured to select a destination sidelink frequency resource from the sidelink frequency resource set corresponding to each transmission path for data transmission, for each logical channel corresponding to each transmission path of the SLRB in the case of the PDCP duplication.

Optionally, the first indication information includes at least one of the following:
a Channel Busy Ratio (CBR) or a Channel Occupy (CO) of the first terminal device on each sidelink frequency resource;
a sidelink interface parameter of the first terminal device on each sidelink frequency resource, wherein the sidelink interface parameter includes: Sidelink-Channel State Information (SL-CSI), Sidelink-Reference Signal Receiving Power (SL-RSRP) or Sidelink Discover-Reference Signal Receiving Power (SD-RSRP);
a sidelink frequency resource set that is expected by the first terminal device and corresponds to a transmission path in the case of the sidelink PDCP duplication; or
sidelink frequency resource that is expected by the first terminal device and can be used in the case of the sidelink PDCP duplication.

Optionally, the second indication information includes at least one of the following:
a CBR or a CO of the second terminal device on each sidelink frequency resource;
a sidelink parameter of the second terminal device on each sidelink frequency resource;
a sidelink parameter frequency resource set that is expected by the second terminal device and corresponds to the transmission path in the case of the sidelink PDCP duplication; or
a sidelink parameter frequency resource set that is expected by the second terminal device and can be used in the case of the sidelink PDCP duplication.

It should be noted that the apparatus embodiments correspond with the above-mentioned method embodiments in a one-to-one manner, and all implementation methods in the above-mentioned method embodiments are applicable to the apparatus embodiments and can achieve the same technical effect.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, or the entirety or parts of the technical solution of the present disclosure may be implemented in a form of a software product. The computer software product is stored in a storage medium, and includes instructions to cause a computer device (which can be a personal computer, a server, or a network device, etc.) or a processor to execute all or part of the steps of the methods described in various embodiments of the present disclosure. The aforementioned storage media include: USB flash disk, removable hard disk, Read-Only Memory (ROM), Random Access Memory (RAM), magnetic disk or optical disc and other media that can store program code.

As shown in Fig. 8, embodiments of the present disclosure further provide a terminal device, which is a first terminal device, including a processor 800, a transceiver 810, a memory 820, and a program stored in the memory 820 and executable on the processor 800; wherein the transceiver 810 is connected to the processor 800 and the memory 820 through a bus interface, wherein the processor 800 is configured to read the program in the memory to implement the following:
obtaining, based on first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

The transceiver 810 is configured to receive and send data under the control of the processor 800.

In Fig. 8, the bus architecture may include any number of interconnected buses and bridges, and connects various circuits including one or more processors represented by the processor 800 and the memory represented by the memory 820. The bus architecture can also link together various other circuits such as peripherals, voltage regulators, and power management circuits, which are all well known in the art and therefore will not be described further herein. The bus interface provides the interface. The transceiver 810 may be a plurality of elements, including a transmitter and a receiver, to allow for communication with various other apparatuses on the transmission medium. The transmission medium includes wireless channels, wired channels, optical cables, and other transmission media. For different user equipments, the user interface 830 can also be an interface capable of externally or internally connecting a required device. The connected device includes but is not limited to a keypad, a display, a speaker, a microphone, a joystick, etc.

The processor 800 is responsible for managing the bus architecture and general processing, and the memory 820 can store data used by the processor 800 when performing operations.

Optionally, the processor 800 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present disclosure according to the obtained executable instructions. The processor and the memory can also be physically separated.

Optionally, the processor is further configured to read the computer program in the memory to implement the following:
sending the first information to a network device serving the first terminal device, and receiving, from the network device, the sidelink frequency resource set available for each transmission path in the case of the PDCP duplication, wherein the sidelink frequency resource set is determined by the network device based on the first information; or
determining, based on the first information, the sidelink frequency resource set available for each transmission path in the case of the PDCP duplication.

Optionally, the sidelink frequency resource set available for each transmission path in the case of the PDCP duplication includes: a sidelink frequency resource set corresponding to each transmission path of the Sidelink Radio Bearer (SLRB) in the case of the PDCP duplication.

Optionally, a quantity of sidelink frequency resource sets is the same as a quantity of transmission paths in the case of the PDCP duplication.

Optionally, the sidelink frequency resources in the sidelink frequency resource set include:
a sidelink carrier; and/or
a sidelink BandWidth Part (BWP).

Optionally, the processor is further configured to read the computer program in the memory to implement the following:
sending the first information to the network device through at least one of SidelinkUEInformation, UEAssistanceInformation or a Uu interface Radio Resource Control (RRC) signaling.

Optionally, the processor is further configured to read the computer program in the memory to implement the following:
obtaining, based on second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

Optionally, the processor is further configured to read the computer program in the memory to implement the following:
sending the second information to the network device serving the first terminal device, and receiving, from the network device, the LCID corresponding to each transmission path of the SLRB in the case of the PDCP duplication, wherein the LCID is determined by the network device serving the first terminal based on the second information; or
determining, based on the second information, the LCID corresponding to each transmission path of the SLRB in the case of the PDCP duplication.

Optionally, the processor is further configured to read the computer program in the memory to implement the following:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, the processor is further configured to read the computer program in the memory to implement the following:
sending the second information to the network device through at least one of SidelinkUEInformation, UEAssistanceInformation or a Uu interface Radio Resource Control (RRC) signaling.

Optionally, the processor is further configured to read the computer program in the memory to implement the following:
sending, to the second terminal device, the sidelink frequency resource set available for each transmission path in the case of the PDCP duplication through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

Optionally, the processor is further configured to read the computer program in the memory to implement the following:
when the first terminal device adopts a network-configured resource allocation mode, sending, to the network device, the sidelink frequency resource set available for each transmission path in the case of the PDCP duplication.

Optionally, the sidelink frequency resource set includes one or more sidelink frequency resources.

Optionally, in the case that the sidelink frequency resource set includes at least two frequency resources, the processor is further configured to read the computer program in the memory to implement the following:
for a logical channel corresponding to each transmission path of an SLRB in the case of the PDCP duplication, selecting a destination sidelink frequency resource from the sidelink frequency resource set corresponding to the transmission path, to perform data transmission.

Optionally, the first indication information includes at least one of the following:
a Channel Busy Ratio (CBR) or a Channel Occupy (CO) of the first terminal device on each sidelink frequency resource;
a sidelink interface parameter of the first terminal device on each sidelink frequency resource, wherein the sidelink interface parameter includes: Sidelink-Channel State Information (SL-CSI), Sidelink-Reference Signal Receiving Power (SL-RSRP) or Sidelink Discover-Reference Signal Receiving Power (SD-RSRP);
a sidelink frequency resource set that is expected by the first terminal device and corresponds to a transmission path in the case of the sidelink PDCP duplication; or
a sidelink frequency resource set that is expected by the first terminal device and can be used in the case of the sidelink PDCP duplication.

Optionally, the second indication information includes at least one of the following:
a CBR or a CO of the second terminal device on each sidelink frequency resource;
a sidelink parameter of the second terminal device on each sidelink frequency resource;
a sidelink parameter frequency resource set that is expected by the second terminal device and corresponds to the transmission path in the case of the sidelink PDCP duplication; or
a sidelink parameter frequency resource set that is expected by the second terminal device and can be used in the case of the sidelink PDCP duplication.

It should be noted here that the above-mentioned terminal device provided in the embodiment of the present disclosure can implement all the method steps implemented in the above-mentioned method embodiments, and can achieve the same technical effect. The parts and beneficial effects of this embodiment that are the same as the method embodiments will not be described in detail here.

The embodiment of the present disclosure further provides a computer-readable storage medium, on which a computer program is stored, wherein the computer program, when performed by a processor, implements the steps of the frequency resource acquisition method applied to the first terminal device. The processor-readable storage medium may be any available media or data storage device that the processor can access, including but not limited to magnetic storage (such as floppy disk, hard disk, magnetic tape, Magneto-Optical disk (MO)), optical storage (such as Compact Disc (CD), Digital Versatile Disc (DVD), Blu-ray Disc (BD), High-definition Versatile Disc (HVD)), and semiconductor memory (such as Read-Only Memory (ROM), Erasable Programmable ROM (EPROM), Electrically Erasable Programmable ROM (EEPROM), non-volatile memory (NAND FLASH), Solid State Drive (SSD)), etc.

As shown in Fig. 9, embodiments of the present disclosure provides a frequency resource determination apparatus 900, applied to a network device, including:
a first determining unit 901, configured to determine, for the first terminal device, a sidelink frequency resource set available for each transmission path in the case of Packet Data Convergence Protocol (PDCP) duplication based on the first information;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

Optionally, the apparatus further includes:
a first receiving unit, configured to receive first information sent by a first terminal device.

Optionally, a first receiving unit is configured to:
receive the first information sent by the first terminal device through at least one of SidelinkUEInformation, UEAssistanceInformation or a Uu interface Radio Resource Control (RRC) signaling.

Optionally, the apparatus further includes:
a second determining unit, configured to determine, based on the second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
the first terminal device reserves an LCID for the sidelink PDCP duplication in the unicast connection between the first terminal device and the second terminal device.

Optionally, a second determining unit is configured to:
randomly select N LCIDs from available LCIDs, and assign the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly select a first LCID from a first LCID set as an LCID of one transmission path in the sidelink PDCP duplication, and determine, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, the apparatus further includes:
a second receiving unit, configured to receive second information sent by the first terminal device.

Optionally, a second receiving unit includes:
receiving the second information sent by the first terminal device through at least one of SidelinkUEInformation, UEAssistanceInformation or a Uu interface Radio Resource Control (RRC) signaling.

Optionally, the apparatus further includes:
a third sending unit, configured to send the Logical Channel Identity (LCID) corresponding to each transmission path of the SLRB in the case of the PDCP duplication to the first terminal device.

Optionally, the apparatus further includes:
a fourth sending unit, configured to send a sidelink frequency resource set available for each transmission path in the case of the PDCP duplication to the first terminal device through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

Optionally, the first indication information includes at least one of the following:
a Channel Busy Ratio (CBR) or a Channel Occupy (CO) of the first terminal device on each sidelink frequency resource;
a sidelink interface parameter of the first terminal device on each sidelink frequency resource, wherein the sidelink interface parameter includes: Sidelink-Channel State Information (SL-CSI), Sidelink-Reference Signal Receiving Power (SL-RSRP) or Sidelink Discover-Reference Signal Receiving Power (SD-RSRP);
a sidelink frequency resource set that is expected by the first terminal device and corresponds to a transmission path in the case of the sidelink PDCP duplication; or
a sidelink frequency resource set that is expected by the first terminal device and can be used in the case of the sidelink PDCP duplication.

Optionally, the second indication information includes at least one of the following:
a CBR or a CO of the second terminal device on each sidelink frequency resource;
a sidelink parameter of the second terminal device on each sidelink frequency resource;
a sidelink parameter frequency resource set that is expected by the second terminal device and corresponds to the transmission path in the case of the sidelink PDCP duplication; or
a sidelink parameter frequency resource set that is expected by the second terminal device and can be used in the case of the sidelink PDCP duplication.

Optionally, the sidelink frequency resource set available for each transmission path in the case of the PDCP duplication includes: a sidelink frequency resource set corresponding to each transmission path of the Sidelink Radio Bearer (SLRB) in the case of the PDCP duplication.

Optionally, a quantity of sidelink frequency resource sets is the same as a quantity of transmission paths in the case of the PDCP duplication.

Optionally, the sidelink frequency resources in the sidelink frequency resource set include:
a sidelink carrier; and/or
a sidelink BandWidth Part (BWP).

It should be noted that the apparatus embodiments correspond with the above-mentioned method embodiments in a one-to-one manner. All implementation methods in the above-mentioned method embodiments are applicable to the apparatus embodiments and can achieve the same technical effect.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, or the entirety or parts of the technical solution of the present disclosure may be implemented in a form of a software product. The computer software product is stored in a storage medium, and includes instructions to cause a computer device (which can be a personal computer, a server, or a network device, etc.) or a processor to execute all or part of the steps of the methods described in various embodiments of the present disclosure. The aforementioned storage media include: USB flash disk, removable hard disk, Read-Only Memory (ROM), Random Access Memory (RAM), magnetic disk or optical disc and other media that can store program code.

As shown in Fig. 10, embodiments of the present disclosure further provide a network device, including a processor 1000, a transceiver 1010, a memory 1020, and a program stored in the memory 1020 and executable on the processor 1000; wherein the transceiver 1010 is connected to the processor 1000 and the memory 1020 via a bus interface, wherein the processor 1000 is configured to read the program in the memory to implement the following process:
determining for the first terminal device, based on the first information, a sidelink frequency resource set available for each transmission path in the case of Packet Data Convergence Protocol (PDCP) duplication;
the first information includes at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

The transceiver 1010 is configured to receive and send data under the control of the processor 1000.

In Fig. 10, the bus architecture may include any number of interconnected buses and bridges, and connect various circuits including one or more processors represented by the processor 1000 and the memory represented by the memory 1020. The bus architecture can also link together various other circuits such as peripherals, voltage regulators, and power management circuits, which are all well known in the art and therefore will not be described further herein. The bus interface provides the interface. The transceiver 1010 may be a plurality of elements, including a transmitter and a receiver, to allow for communication with various other apparatuses on the transmission medium. The transmission medium includes wireless channels, wired channels, optical cables, and other transmission media. For different user equipments, the user interface 1030 can also be an interface capable of externally or internally connecting a required device. The connected device includes but is not limited to a keypad, a display, a speaker, a microphone, a joystick, etc.

The processor 1000 is responsible for managing the bus architecture and general processing, and the memory 1020 can store data used by the processor 1000 when performing operations.

Optionally, the processor 1000 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present disclosure according to the obtained executable instructions. The processor and the memory can also be physically separated.

Optionally, the processor is further configured to read the computer program in the memory to implement the following:
receiving the first information sent by the first terminal device through the transceiver.

Optionally, the processor is configured to read the computer program in the memory to implement the following:
receiving the first information sent by the first terminal device through the transceiver through at least one of SidelinkUEInformation, UEAssistanceInformation or a Uu interface Radio Resource Control (RRC) signaling.

Optionally, the processor is further configured to read the computer program in the memory to implement the following:
determining, based on the second information, a Logical Channel Identity (LCID) corresponding to each transmission path of a Sidelink Radio Bearer (SLRB) in the case of the PDCP duplication;
the second information includes at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

Optionally, the processor is further configured to read the computer program in the memory to implement the following:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, the LCID of the other transmission path in the sidelink PDCP duplication, wherein the first LCID is an available LCID, and the first LCID set includes: LCIDs available for a sidelink interface of the first terminal device and the second terminal device.

Optionally, the processor is further configured to read the computer program in the memory to implement the following:
receiving the second information sent by the first terminal device.

Optionally, the processor is configured to read the computer program in the memory to implement the following:
receiving, through the transceiver, the second information sent by the first terminal device through at least one of SidelinkUEInformation, UEAssistanceInformation or a Uu interface Radio Resource Control (RRC) signaling.

Optionally, the processor is further configured to read the computer program in the memory to implement the following:
sending the Logical Channel Identity (LCID) corresponding to each transmission path of the SLRB in the case of the PDCP duplication through the transceiver to the first terminal device.

Optionally, the processor is further configured to read the computer program in the memory to implement the following:
sending, to the first terminal device through the transceiver, the sidelink frequency resource set available for each transmission path in the case of the PDCP duplication through a configuration signaling of the sidelink PDCP duplication or an activation signaling of the sidelink PDCP duplication.

Optionally, the activation signaling of the sidelink PDCP duplication includes at least one of the following: an RRC signaling, a Media Access Control Control Element (MAC CE) or a physical layer signaling.

Optionally, the first indication information includes at least one of the following:
a Channel Busy Ratio (CBR) or a Channel Occupy (CO) of the first terminal device on each sidelink frequency resource;
a sidelink interface parameter of the first terminal device on each sidelink frequency resource, wherein the sidelink interface parameter includes: Sidelink-Channel State Information (SL-CSI), Sidelink-Reference Signal Receiving Power (SL-RSRP) or Sidelink Discover-Reference Signal Receiving Power (SD-RSRP);
a sidelink frequency resource set that is expected by the first terminal device and corresponds to a transmission path in the case of the sidelink PDCP duplication; or
a sidelink frequency resource set that is expected by the first terminal device and can be used in the case of the sidelink PDCP duplication.

Optionally, the second indication information includes at least one of the following:
a CBR or a CO of the second terminal device on each sidelink frequency resource;
a sidelink parameter of the second terminal device on each sidelink frequency resource;
a sidelink parameter frequency resource set that is expected by the second terminal device and corresponds to the transmission path in the case of the sidelink PDCP duplication; or
a sidelink parameter frequency resource set that is expected by the second terminal device and can be used in the case of the sidelink PDCP duplication.

Optionally, the sidelink frequency resource set available for each transmission path in the case of the PDCP duplication includes: a sidelink frequency resource set corresponding to each transmission path of the Sidelink Radio Bearer (SLRB) in the case of the PDCP duplication.

Optionally, a quantity of sidelink frequency resource sets is the same as a quantity of transmission paths in the case of the PDCP duplication.

Optionally, the sidelink frequency resources in the sidelink frequency resource set include:
a sidelink carrier; and/or
a sidelink BandWidth Part (BWP).

It should be noted here that the above-mentioned network device provided in the embodiment of the present disclosure can implement all the method steps implemented in the above-mentioned method embodiments, and can achieve the same technical effect. The parts and beneficial effects of this embodiment that are the same as the method embodiments will not be described in detail here.

The embodiments of the present disclosure further provide a computer-readable storage medium storing a computer program, wherein when the computer program is executed by a processor, the steps of the frequency resource determination method applied to a network device are implemented. The processor-readable storage medium may be any available media or data storage device that the processor can access, including but not limited to magnetic storage (such as floppy disk, hard disk, magnetic tape, Magneto-Optical disk (MO)), optical storage (such as Compact Disc (CD), Digital Versatile Disc (DVD), Blu-ray Disc (BD), High-definition Versatile Disc (HVD)), and semiconductor memory (such as Read-Only Memory (ROM), Erasable Programmable ROM (EPROM), Electrically Erasable Programmable ROM (EEPROM), non-volatile memory (NAND FLASH), Solid State Drive (SSD)), etc.

Those skilled in the art will appreciate that embodiments of the present application may be provided as methods, systems, or computer program products. Accordingly, the present application may take the form of an entirely hardware embodiment, an entirely software embodiment, or an embodiment that combines software and hardware aspects. Furthermore, the present application may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process, such that the instructions which are executed on the computer or other programmable device provide steps for implementing the functions specified in the flow diagram flow or flows and/or block diagram block or blocks.

Obviously, those skilled in the art can make various changes and modifications to the present disclosure without departing from the spirit and scope of the disclosure. Thus, if these changes and modifications of the present disclosure fall within the scope of the claims of the present disclosure or equivalent thereof, the present disclosure is also intended to include these changes and modifications.

## Claims

1. A frequency resource acquisition method, performed by a first terminal device, comprising:
obtaining, based on first information, a sidelink frequency resource set available for each transmission path in the case of Packet Data Convergence Protocol (PDCP) duplication;
the first information comprises at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

2. The method according to claim 1, wherein the obtaining, based on the first information, the sidelink frequency resource set available for each transmission path in the case of the Packet Data Convergence Protocol (PDCP) duplication comprises:
sending the first information to a network device serving the first terminal device, and receiving, from the network device, the sidelink frequency resource set available for each transmission path in the case of the PDCP duplication, wherein the sidelink frequency resource set is determined by the network device based on the first information; or
determining, based on the first information, the sidelink frequency resource set available for each transmission path in the case of the PDCP duplication.

3. The method according to claim 1 or 2, wherein the sidelink frequency resource set available for each transmission path in the case of the PDCP duplication comprises: the sidelink frequency resource set corresponding to each transmission path of a Sidelink Radio Bearer (SLRB) in the case of the PDCP duplication.

4. The method according to claim 1 or 2, wherein a quantity of sidelink frequency resource sets is the same as a quantity of transmission paths in the case of the PDCP duplication.

5. The method according to claim 1 or 2, wherein the sidelink frequency resources in the sidelink frequency resource set comprise:
a sidelink carrier; and/or
a sidelink BandWidth Part (BWP).

6. The method according to claim 2, wherein the sending the first information to the network device serving the first terminal device comprises:
sending the first information to the network device through at least one of SidelinkUEInformation, UEAssistanceInformation or a Uu interface Radio Resource Control (RRC) signaling.

7. The method according to claim 1, further comprising:
obtaining, based on second information, a Logical Channel Identity (LCID) corresponding to each transmission path of a Sidelink Radio Bearer (SLRB) in the case of the PDCP duplication;
the second information comprises at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

8. The method according to claim 7, wherein the obtaining, based on the first information, the LCID corresponding to each transmission path of the Sidelink Radio Bearer (SLRB) in the case of the PDCP duplication comprises:
sending the second information to a network device serving the first terminal device, and receiving, from the network device, the LCID corresponding to each transmission path of the SLRB in the case of the PDCP duplication, wherein the LCID is determined by the network device serving the first terminal based on the second information; or
determining, based on the second information, the LCID corresponding to each transmission path of the SLRB in the case of the PDCP duplication.

9. The method according to claim 8, wherein the determining, based on the second information, the LCID corresponding to each transmission path of the SLRB in the case of the PDCP duplication comprises:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, an LCID of another transmission path in the sidelink PDCP duplication, wherein the first LCID is an available LCID, and the first LCID set comprises: an LCID available for a sidelink interface of the first terminal device and the second terminal device.

10. The method according to claim 8, wherein the sending the second information to the network device serving the first terminal device comprises:
sending the second information to the network device through at least one of SidelinkUEInformation, UEAssistanceInformation or a Uu interface Radio Resource Control (RRC) signaling.

11. The method according to claim 1, further comprising:
sending, to the second terminal device, the sidelink frequency resource set available for each transmission path in the case of the PDCP duplication through a configuration signaling of the sidelink PDCP duplication or an activation signaling of the sidelink PDCP duplication.

12. The method according to claim 11, wherein the activation signaling of the sidelink PDCP duplication comprises at least one of the following: an RRC signaling, a Media Access Control Control Element (MAC CE) or a physical layer signaling.

13. The method according to claim 2, wherein after the determining, based on the first information, the sidelink frequency resource set available for each transmission path in the case of the PDCP duplication, the method further comprises:
when the first terminal device adopts a network-configured resource allocation mode, sending, to the network device, the sidelink frequency resource set available for each transmission path in the case of the PDCP duplication.

14. The method according to claim 1, wherein the sidelink frequency resource set comprises one or more sidelink frequency resources.

15. The method according to claim 1, wherein in the case that the sidelink frequency resource set comprises at least two frequency resources, the method further comprises:
for a logical channel corresponding to each transmission path of an SLRB in the case of the PDCP duplication, selecting a destination sidelink frequency resource from the sidelink frequency resource set corresponding to the transmission path, to perform data transmission.

16. The method according to claim 1, wherein the first indication information comprises at least one of the following:
a Channel Busy Ratio (CBR) or a Channel Occupy (CO) of the first terminal device on each sidelink frequency resource;
a sidelink interface parameter of the first terminal device on each sidelink frequency resource, wherein the sidelink interface parameter comprises: Sidelink-Channel State Information (SL-CSI), Sidelink-Reference Signal Receiving Power (SL-RSRP) or Sidelink Discover-Reference Signal Receiving Power (SD-RSRP);
a sidelink frequency resource set that is expected by the first terminal device and corresponds to a transmission path in the case of the sidelink PDCP duplication; or
a sidelink frequency resource set that is expected by the first terminal device and can be used in the case of the sidelink PDCP duplication.

17. The method according to claim 1, wherein the second indication information comprises at least one of the following:
a CBR or a CO of the second terminal device on each sidelink frequency resource;
a sidelink parameter of the second terminal device on each sidelink frequency resource;
a sidelink parameter frequency resource set that is expected by the second terminal device and corresponds to the transmission path in the case of the sidelink PDCP duplication; or
a sidelink parameter frequency resource set that is expected by the second terminal device and can be used in the case of the sidelink PDCP duplication.

18. A frequency resource determination method, performed by a network device, comprising:
determining for a first terminal device, based on first information, a sidelink frequency resource set available for each transmission path in the case of Packet Data Convergence Protocol (PDCP) duplication;
the first information comprises at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

19. The method according to claim 18, further comprising:
receiving the first information sent by the first terminal device.

20. The method according to claim 19, wherein the receiving the first information sent by the first terminal device comprises:
receiving the first information sent by the first terminal device through at least one of SidelinkUEInformation, UEAssistanceInformation or a Uu interface Radio Resource Control (RRC) signaling.

21. The method according to claim 18, further comprising:
determining, based on second information, a Logical Channel Identity (LCID) corresponding to each transmission path of a Sidelink Radio Bearer (SLRB) in the case of the PDCP duplication;
the second information comprises at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

22. The method according to claim 21, wherein the determining, based on the second information, the Logical Channel Identity (LCID) corresponding to each transmission path of the Sidelink Radio Bearer (SLRB) in the case of the PDCP duplication comprises:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, an LCID of another transmission path in the sidelink PDCP duplication, wherein the first LCID is an available LCID, and the first LCID set comprises: an LCID available for a sidelink interface of the first terminal device and the second terminal device.

23. The method according to claim 21, further comprising:
receiving the second information sent by the first terminal device.

24. The method according to claim 23, wherein the receiving the second information sent by the first terminal device comprises:
receiving the second information sent by the first terminal device through at least one of SidelinkUEInformation, UEAssistanceInformation or a Uu interface Radio Resource Control (RRC) signaling.

25. The method according to claim 21, further comprising:
sending, to the first terminal device, the Logical Channel Identity (LCID) corresponding to each transmission path of the SLRB in the case of the PDCP duplication.

26. The method according to claim 18, further comprising:
sending, to the first terminal device through a configuration signaling of the sidelink PDCP duplication or an activation signaling of the sidelink PDCP duplication, the sidelink frequency resource set available for each transmission path in the case of the PDCP duplication.

27. The method according to claim 26, wherein the activation signaling of the sidelink PDCP duplication comprises at least one of the following: an RRC signaling, a Media Access Control Control Element (MAC CE) or a physical layer signaling.

28. A terminal device, the terminal device being a first terminal device, comprising a memory, a transceiver, and a processor;
the memory is configured to store a computer program; the transceiver is configured to send and receive data under the control of the processor; the processor is configured to read the computer program in the memory to implement the following:
obtaining, based on first information, a sidelink frequency resource set available for each transmission path in the case of Packet Data Convergence Protocol (PDCP) duplication;
the first information comprises at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

29. The terminal device according to claim 28, wherein the processor is configured to read the computer program in the memory to implement the following:
sending the first information to a network device serving the first terminal device, and receiving, from the network device, the sidelink frequency resource set available for each transmission path in the case of the PDCP duplication, wherein the sidelink frequency resource set is determined by the network device based on the first information; or
determining, based on the first information, the sidelink frequency resource set available for each transmission path in the case of the PDCP duplication.

30. The terminal device according to claim 29, wherein the processor is configured to read the computer program in the memory to implement the following:
sending the first information to the network device through at least one of SidelinkUEInformation, UEAssistanceInformation or a Uu interface Radio Resource Control (RRC) signaling.

31. The terminal device according to claim 28, wherein the processor is further configured to read the computer program in the memory to implement the following:
obtaining, based on second information, a Logical Channel Identity (LCID) corresponding to each transmission path of a Sidelink Radio Bearer (SLRB) in the case of the PDCP duplication;
the second information comprises at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

32. The terminal device according to claim 31, wherein the processor is configured to read the computer program in the memory to implement the following:
sending the second information to a network device serving the first terminal device, and receiving, from the network device, the LCID corresponding to each transmission path of the SLRB in the case of the PDCP duplication, wherein the LCID is determined by the network device serving the first terminal based on the second information; or
determining, based on the second information, the LCID corresponding to each transmission path of the SLRB in the case of the PDCP duplication.

33. The terminal device according to claim 32, wherein the processor is configured to read the computer program in the memory to implement the following:
randomly selecting N LCIDs from available LCIDs, and assigning the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly selecting a first LCID from a first LCID set as an LCID of one transmission path in the sidelink PDCP duplication, and determining, based on an association between the first LCID and an LCID of a different transmission path, an LCID of another transmission path in the sidelink PDCP duplication, wherein the first LCID is an available LCID, and the first LCID set comprises: an LCID available for a sidelink interface of the first terminal device and the second terminal device.

34. The terminal device according to claim 32, wherein the processor is further configured to read the computer program in the memory to implement the following:
sending the second information to the network device through at least one of SidelinkUEInformation, UEAssistanceInformation or a Uu interface Radio Resource Control (RRC) signaling.

35. The terminal device according to claim 28, wherein the processor is further configured to read the computer program in the memory to implement the following:
sending, to the second terminal device through a configuration signaling of the sidelink PDCP duplication or an activation signaling of the sidelink PDCP duplication, the sidelink frequency resource set available for each transmission path in the case of the PDCP duplication.

36. The terminal device according to claim 28, wherein the processor is further configured to read the computer program in the memory to implement the following:
when the first terminal device adopts a network-configured resource allocation mode, sending, to a network device, the sidelink frequency resource set available for each transmission path in the case of the PDCP duplication.

37. The terminal device according to claim 28, wherein the processor is further configured to read the computer program in the memory to implement the following:
for a logical channel corresponding to each transmission path of an SLRB in the case of the PDCP duplication, selecting a destination sidelink frequency resource from the sidelink frequency resource set corresponding to the transmission path, to perform data transmission.

38. A network device, comprising a memory, a transceiver, and a processor;
the memory is configured to store a computer program; the transceiver is configured to send and receive data under the control of the processor; the processor is configured to read the computer program in the memory to implement the following:
determining for the first terminal device, based on the first information, a sidelink frequency resource set available for each transmission path in the case of Packet Data Convergence Protocol (PDCP) duplication;
the first information comprises at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

39. A frequency resource acquisition apparatus, applied to a first terminal device, comprising:
a first acquisition unit, configured to obtain, based on the first information, a sidelink frequency resource set available for each transmission path in the case of Packet Data Convergence Protocol (PDCP) duplication;
the first information comprises at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

40. The apparatus according to claim 39, wherein the first acquisition unit is configured to:
send the first information to a network device serving the first terminal device, and receive, from the network device, the sidelink frequency resource set available for each transmission path in the case of the PDCP duplication, wherein the sidelink frequency resource set is determined by the network device based on the first information; or
determine, based on the first information, the sidelink frequency resource set available for each transmission path in the case of the PDCP duplication.

41. The apparatus according to claim 39 or 40, wherein the sidelink frequency resource set available for each transmission path in the case of the PDCP duplication comprises: the sidelink frequency resource set corresponding to each transmission path of a Sidelink Radio Bearer (SLRB) in the case of the PDCP duplication.

42. The apparatus according to claim 39 or 40, wherein a quantity of sidelink frequency resource sets is the same as a quantity of transmission paths in the case of the PDCP duplication.

43. The apparatus according to claim 39 or 40, wherein the sidelink frequency resources in the sidelink frequency resource set comprise:
a sidelink carrier; and/or
a sidelink BandWidth Part (BWP).

44. The apparatus according to claim 40, wherein the first acquisition unit is configured to:
send the first information to the network device through at least one of SidelinkUEInformation, UEAssistanceInformation or a Uu interface Radio Resource Control (RRC) signaling.

45. The apparatus according to claim 39, further comprising:
a second acquisition unit, configured to obtain, based on second information, a Logical Channel Identity (LCID) corresponding to each transmission path of a Sidelink Radio Bearer (SLRB) in the case of the PDCP duplication;
the second information comprises at least one of the following:
an LCID available for the first terminal device in the unicast connection between the first terminal device and the second terminal device;
an LCID that is recommended by the first terminal device in the unicast connection between the first terminal device and the second terminal device and used for sidelink PDCP duplication; or
an LCID that is reserved for sidelink PDCP duplication by the first terminal device in the unicast connection between the first terminal device and the second terminal device.

46. The apparatus according to claim 45, wherein the second acquisition unit is configured to:
send the second information to a network device serving the first terminal device, and receive, from the network device, the LCID corresponding to each transmission path of the SLRB in the case of the PDCP duplication, wherein the LCID is determined by the network device serving the first terminal based on the second information; or
determine, based on the second information, the LCID corresponding to each transmission path of the SLRB in the case of the PDCP duplication.

47. The apparatus according to claim 46, wherein the second acquisition unit is configured to:
randomly select N LCIDs from available LCIDs, and assign the N LCIDs respectively as LCIDs corresponding to each transmission path, with a one-to-one correspondence between the LCIDs and the transmission paths, wherein N is equal to a quantity of transmission paths in the case of the sidelink PDCP duplication; or
randomly select a first LCID from a first LCID set as an LCID of one transmission path in the sidelink PDCP duplication, and determine, based on an association between the first LCID and an LCID of a different transmission path, an LCID of another transmission path in the sidelink PDCP duplication, wherein the first LCID is an available LCID, and the first LCID set comprises: an LCID available for a sidelink interface of the first terminal device and the second terminal device.

48. The apparatus according to claim 46, wherein the second acquisition unit is configured to:
send the second information to the network device through at least one of SidelinkUEInformation, UEAssistanceInformation or a Uu interface Radio Resource Control (RRC) signaling.

49. A frequency resource determination apparatus, applied to a network device, comprising:
a first determining unit, configured to determine, for the first terminal device, a sidelink frequency resource set available for each transmission path in the case of Packet Data Convergence Protocol (PDCP) duplication based on the first information;
the first information comprises at least one of the following:
a combination of a layer 2 source address and a layer 2 destination address of a unicast connection between the first terminal device and a second terminal device;
first indication information, wherein the first indication information is indication information of a sidelink frequency resource determined by the first terminal device; or
second indication information, wherein the second indication information is indication information of a sidelink frequency resource received by the first terminal device from the second terminal device.

50. A processor-readable storage medium storing a computer program, wherein the computer program is used to cause the processor to execute the method according to any one according to claims 1 to 27.
